# FASCICULE DE BREVET EUROPEEN

(11) **EP 2 544 892 B1**
(45) Date de publication et mention de la délivrance du brevet: **11.07.2018**
(21) Numéro de dépôt: 11709905.1
(22) Date de dépôt: 11.03.2011
(51) Int. Cl.: B32B 15/01, C22F 1/04, B21D 47/04, B22F 7/04, B32B 5/18, B32B 15/20, B32B 3/28, C22F 1/00

(54) **PROCÉDÉ DE FABRICATION D'UN ASSEMBLAGE MÉTALLIQUE**
VERFAHREN ZUR HERSTELLUNG EINER METALLANORDNUNG
METHOD FOR MANUFACTURING A METAL ASSEMBLY

(30) Priorité: 12.03.2010 FR 1051808
(43) Date de publication de la demande: 16.01.2013
(73) Titulaire: Centre National de la Recherche Scientifique (C.N.R.S.), 75016 Paris (FR); Conservatoire National des Arts et Métiers, 75003 Paris (FR); Ecole Normale Supérieure de Cachan, 94230 Cachan (FR)
(72) Inventeur: PREVOND, Laurent, F-77270 Villeparisis (FR); COLLARD, Nicolas, F-08300 Rethel (FR); CAPLAIN, Renaud, F-75007 Paris (FR); FRANCOIS, Pierre, F-92120 Montrouge (FR)
(74) Mandataire: Novagraaf Technologies
(86) Numéro de dépôt international: PCT/EP2011/053749
(87) Numéro de publication internationale: WO 2011/110687

(56) Documents cités:
- EP-A1- 1 468 765
- EP-A1- 1 837 103
- WO-A1-94/10351
- US-A- 3 340 027
- US-A1- 2003 108 763
- US-A1- 2005 136 256
- US-A1- 2006 113 353
- US-A1- 2008 241 582
- US-A1- 2009 166 067
- G. C. Kennedy: "Phase relations in the system of Al 2 O 3 -; h 2 O at high temperatures and pressures", AMERICAN JOURNAL OF SCIENCE., vol. 257, no. 8, 1 October 1959 (1959-10-01), pages 563-573, XP055412466, US ISSN: 0002-9599, DOI: 10.2475/ajs.257.8.563

## Description

L'invention concerne un procédé de fabrication d'un assemblage métallique ainsi qu'un assemblage métallique associé.

Plus particulièrement, l'invention concerne un procédé permettant d'obtenir un assemblage aluminium-métal, c'est-à-dire comprenant au moins une feuille d'aluminium et une couche métallique.

L'aluminium est un métal malléable, paramagnétique, de faible densité, très conducteur et ayant des propriétés de résistance à l'oxydation remarquables.

Lors de son oxydation avec l'air, il se forme très rapidement en surface une couche fine d'alumine qui permet de le protéger contre la progression de l'oxydation. Cette couche d'alumine naturelle a une épaisseur allant généralement de un à trois micromètres.

Néanmoins, l'alumine est très isolante, par opposition à l'aluminium, et forme une barrière empêchant notamment le mouillage de l'aluminium sur un autre métal (notamment sur du fer).

Certaines applications nécessitent cependant des matériaux ayant à la fois les propriétés de l'aluminium, notamment sa conductivité, sa faible densité, etc. mais aussi des propriétés supplémentaires telles que le magnétisme, la résistance à la rupture, la capacité à être soudé, que peuvent présenter notamment l'acier ou le nickel.

Par exemple, afin de respecter les normes anti-pollution visant à réduire les émissions de dioxyde de carbone dans l'atmosphère, des constructeurs automobiles envisagent de réduire la masse des véhicules en remplaçant certains composants en acier par des composants comprenant de l'aluminium, notamment en assemblant des tôles d'acier avec des tôles d'aluminium.

Or la fabrication d'un assemblage comprenant de l'aluminium et du fer est très problématique car ces deux matériaux sont difficiles à allier.

Typiquement, les diagrammes d'équilibre montrent que les alliages d'aluminium avec des matériaux ferromagnétiques sont possibles. Néanmoins, ces alliages sont susceptibles de former des composés définis, mécaniquement fragiles, qui sont paramagnétiques.

Plus généralement, la matrice des composites à base d'aluminium ne comprend habituellement pas plus de 20% de particules pour des questions d'homogénéité.

Dans un autre domaine, afin d'augmenter les performances de moteurs ou générateurs électriques à rotor (machine tournante) ou déplaceur (ou mover en anglais, pour une machine linéaire) massif, il est nécessaire de trouver un matériau présentant une bonne conductivité électrique et des propriétés ferromagnétiques, tout en ayant un rapport résistance mécanique sur poids important.

Il a donc été proposé des procédés de fabrication d'alliages d'aluminium et de fer.

Par exemple, le document FR 2 836 154 décrit un procédé de fabrication de bandes minces en alliage aluminium-fer, dans lequel on réalise une coulée continue entre cylindres d'une bande d'aluminium, on homogénéise cette bande pendant une dizaine d'heures à une température qui n'est pas trop élevée, i.e. entre 420 et 550 °C, et on lamine cette bande à froid en plusieurs passes. Il est possible de réaliser en outre un recuit intermédiaire relativement court, de l'ordre d'une à quatre heures, et à une température pas trop élevée pour éviter un grossissement du grain, et un recuit final à une température comprise entre 200°C et 430°C pendant au moins trente heures.

Cependant, dans ce document, la teneur en fer doit rester inférieure à 1.9% pour éviter de trop approcher la teneur eutectique aluminium-fer, qui entraîne l'apparition de phases primaires grossières AlFe. L'alliage obtenu ne présente donc pas certaines propriétés recherchées du fer, telles que le magnétisme.

La fabrication d'assemblages métalliques comprenant une feuille (ou tôle) d'aluminium et une feuille (ou tôle) réalisée dans un autre métal, notamment du nickel, du cuivre, du cobalt, ou même de l'aluminium, intéresse également les industriels. Par exemple, il est très difficile, sans traitement préalable, de souder par points une feuille d'aluminium avec une feuille métallique, ce qui peut poser des problèmes dans sa mise en oeuvre.

De nombreux procédés de fabrication d'assemblages métalliques à base d'aluminium ont été développés, mais tous ont l'inconvénient d'être longs et difficiles à mettre en oeuvre, nécessitent la plupart du temps des installations spécifiques et ont un coût énergétique élevé.

Le document EP 1 468 765 D1 décrit un procédé de fabrication d'une préforme pour une mousse d'aluminium, au cours duquel on enduit une feuille d'aluminium-silicium d'un agent moussant en poudre, de préférence du TiH2. Afin de répartir uniformément l'agent moussant, on empile plusieurs feuilles d'aluminium-silicium. L'empilement peut ensuite être placé entre deux tôles de recouvrement, qui peuvent comprendre un coeur en aluminium recouvert d'une couche d'aluminium soudable. L'ensemble est alors chauffé à une température inférieure à 400°C, puis laminé à chaud.

Le document US 2006/0113353 décrit un procédé de fabrication d'un assemblage aluminium-métal comprenant les étapes consistant à :
- traiter thermiquement une feuille en aluminium en la portant à une température comprise entre 50 et 200° ; et
- fixer une feuille de titane sur la feuille d'aluminium par colaminage afin d'obtenir l'assemblage métallique.

Le document US 3 340 027 quant à lui décrit un procédé de fabrication d'un assemblage aluminium-métal comprenant les étapes consistant à :
- traiter thermiquement une feuille dans un aluminium allié à du chrome pendant au moins 10h;
- colaminer la feuille en alliage d'aluminium et avec une feuille en aluminium similaire non allié avec du chrome afin d'obtenir l'assemblage métallique.

Enfin, le document WO 94/10351 décrit un procédé de fabrication d'un assemblage aluminium-métal, au cours duquel une première couche est fabriquée par traitement thermique d'une poudre métallique comprenant un alliage d'aluminium et un matériau de renforcement. Cette première couche est ensuite colaminée à chaud avec une ou plusieurs autres couches métalliques.

Un objectif de la demande est donc de proposer un procédé de fabrication d'un assemblage métallique, comprenant au moins une feuille d'aluminium et une couche métallique, qui soit plus simple et moins long à mettre en oeuvre et de coût énergétique modéré.

Un autre objectif de la demande est de proposer un procédé de fabrication d'un assemblage métallique comprenant au moins une feuille d'aluminium et une couche métallique et pouvant être soudé par points.

Un autre objectif de la demande est de proposer un assemblage métallique comprenant une feuille d'aluminium dans laquelle est interpénétrée une couche métallique, et présentant des propriétés remarquables telles qu'un rapport résistance mécanique sur poids élevé, une bonne conductivité thermique et une bonne conductivité électrique, un coefficient de perméabilité magnétique élevé, une importante résistance à la corrosion et au délaminage, et/ou une gamme d'utilisation en températures étendue, etc.

Pour cela, l'invention propose un procédé de fabrication d'un assemblage aluminium-métal comprenant les étapes consistant à :
- traiter thermiquement une feuille en aluminium en la portant à une température comprise entre 80% et 100% de la température de fusion du matériau la constituant pendant une durée suffisante pour créer et stabiliser par transformation allotropique une couche d'alumine alpha en surface de ladite feuille d'aluminium, puis en la laissant refroidir ;
- prévoir une couche métallique ayant une ductilité inférieure ou égale à la ductilité de la feuille en aluminium après refroidissement, ladite couche présentant des irrégularités de surface d'une profondeur supérieure ou égale à l'épaisseur de la couche d'alumine alpha ; et
- colaminer la feuille d'aluminium et la couche métallique afin d'obtenir l'assemblage métallique.

Certains aspects préférés mais non limitatifs du procédé selon l'invention sont les suivants :
- le colaminage est réalisé à froid,
- colaminage est réalisé en une seule passe,
- la durée du traitement thermique de la feuille d'aluminium est comprise entre une vingtaine de minutes et environ deux heures,
- la couche métallique comprend de la poudre métallique et/ou une feuille métallique choisie parmi l'un des éléments du groupe suivant : une grille, un déployé, une mousse métallique, une structure en nids d'abeilles, des câbles, ou une feuille métallique rugueuse,
- la couche métallique comprend de la poudre, et le procédé comprend en outre une étape de déshydratation de la poudre préalablement à l'étape de colaminage,
- la feuille métallique est une feuille d'aluminium supplémentaire, ledit procédé comprenant en outre, préalablement à l'étape de colaminage des feuilles, les étapes suivantes :
   - porter la feuille d'aluminium supplémentaire à une température comprise entre 80% et 100% de la température de fusion du matériau la constituant pendant une durée suffisante pour créer et stabiliser par transformation allotropique une couche d'alumine alpha à la surface de ladite feuille d'aluminium ; et
   - laisser refroidir la feuille d'aluminium supplémentaire,
- la couche métallique comprend une feuille métallique, et le procédé comprend en outre les étapes suivantes préalablement à l'étape de colaminage :
   - chauffer la feuille métallique à une température comprise entre environ 70% et 98% de la température de fusion du métal la constituant pendant une durée déterminée en fonction de l'épaisseur de la feuille ; et
   - laisser refroidir la feuille métallique jusqu'à température ambiante,
- il comprend en outre une étape au cours de laquelle la feuille métallique est décapée entre les étapes de refroidissement et de colaminage,
- il comprend en outre une étape au cours de laquelle la feuille métallique reçoit un traitement de surface,
- la couche métallique comprend au moins une feuille métallique, comprenant en outre une étape d'assemblage des feuilles d'aluminium (10, 10') et métallique(s) préalablement à leur colaminage,
- il comprend en outre les étapes suivantes :
   - porter une feuille d'aluminium additionnelle à une température comprise entre 80% et 100% de la température de fusion du matériau pendant une durée suffisante pour créer et stabiliser par transformation allotropique une couche d'alumine alpha à la surface de ladite feuille d'aluminium additionnelle ;
   - laisser refroidir la feuille d'aluminium additionnelle; et
   - colaminer la feuille d'aluminium additionnelle avec l'assemblage métallique,
- le colaminage de la feuille d'aluminium additionnelle avec l'assemblage métallique est réalisé simultanément ou postérieurement au colaminage de la feuille d'aluminium et de la couche métallique formant l'assemblage, et
- on réalise au moins deux assemblages métalliques, et comprenant en outre les étapes suivantes :
   - porter chaque assemblage métallique à une température comprise entre 80% et 100% de la température de fusion du matériau constituant la feuille d'aluminium pendant une durée suffisante pour créer et stabiliser par transformation allotropique une couche d'alumine alpha à la surface de la feuille d'aluminium de chaque assemblage ;
   - refroidir chaque assemblage métallique jusqu'à température ambiante ; et
   - colaminer les assemblages métalliques.

Selon un deuxième aspect, l'invention propose un assemblage métallique obtenu par le procédé selon l'invention, comprenant :
- une feuille d'aluminium ayant subi l'étape de traitement thermique, et
- une couche métallique appliquée contre une surface de la feuille d'aluminium,
- la feuille d'aluminium interpénétrant des irrégularités de surface 21 de la couche métallique 20 suite à l'étape de colaminage.

Certains aspects préférés mais non limitatifs de l'assemblage métallique selon l'invention sont les suivants :
- la couche métallique comprend de la poudre métallique et/ou une feuille métallique choisie parmi l'un des éléments du groupe suivant : une grille, un déployé, une mousse métallique, une structure en nids d'abeilles, des câbles, ou une feuille métallique rugueuse,
- la poudre métallique et/ou la feuille métallique est réalisée dans l'un des matériaux du groupe suivant : acier, fer, nickel, cobalt, métal cubique à faces centrées ou leurs alliages, et la feuille d'aluminium est réalisée dans de l'aluminium pur ou dans un alliage d'aluminium,
- la couche métallique comprend un déployé en acier, une feuille d'aluminium, une mousse métallique et/ou de la poudre métallique,
- il comprend en outre une feuille d'aluminium additionnelle par-dessus la couche métallique.

Selon un dernier aspect, l'invention propose un sandwich de feuilles métalliques, comprenant au moins deux assemblages métalliques selon l'invention, et dans lequel la feuille d'aluminium d'un premier des assemblages métalliques interpénètre à la fois des irrégularités de surface de la couche métallique dudit premier assemblage et de la feuille métallique du deuxième des assemblages métalliques.

D'autres caractéristiques, buts et avantages de la présente invention apparaîtront mieux à la lecture de la description détaillée qui va suivre, et en regard des dessins annexés, donnés à titre d'exemple, non limitatifs et sur lesquels :

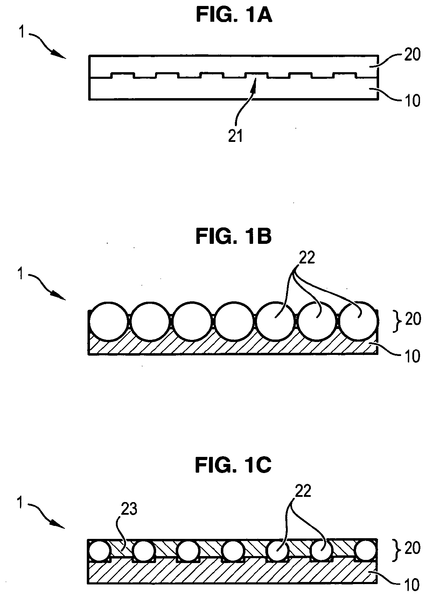

Les figures 1A à 1C sont des vues en coupe d'exemples de réalisation d'assemblages métalliques conformes à l'invention ; et

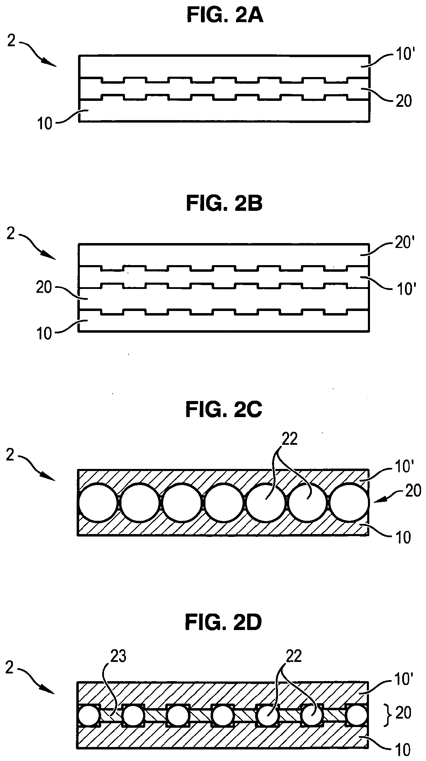

Les figures 2A à 2D sont des vues en coupe d'exemples de réalisation de sandwiches conformes à l'invention.

Nous allons tout d'abord décrire le procédé général de fabrication d'un assemblage métallique comprenant au moins une feuille d'aluminium 10 et une couche métallique 20 qui s'interpénètrent de manière à former un empilement cohérent.

Selon une première étape, on effectue une transformation allotropique de la couche d'oxyde présente en surface de la feuille d'aluminium 10.

Pour cela, on porte la feuille d'aluminium 10 à une température comprise entre environ 80% et 100% de la température de fusion de son matériau constitutif pendant une durée suffisamment importante pour stabiliser ladite feuille.

De préférence, on chauffe la feuille d'aluminium 10 à une température comprise entre 93% et 98% de la température de fusion, plus préférentiellement encore à une température de l'ordre de 95% (+/- 1%).

Par feuille on comprendra ici une tôle mince (ayant quelques millimètres d'épaisseur), une feuille (ayant quelques microns d'épaisseur), etc. ou toute forme sensiblement plane pouvant être laminée.

La feuille d'aluminium 10 peut, par ailleurs, être réalisée dans de l'aluminium pur, ou dans un alliage d'aluminium.

Néanmoins, l'invention est plus particulièrement adaptée aux tôles d'aluminium ayant une bonne conduction thermique, et pouvant être portées à une température uniforme dans tout leur volume. Typiquement, il peut s'agir d'une feuille d'aluminium réalisée dans la série 1000 de la nomenclature internationale (A5, A9, ...).

Par exemple, la feuille d'aluminium peut être un papier aluminium alimentaire ou une tôle en aluminium de titre A9, ayant une épaisseur comprise entre 5 et 20 microns chauffée entre 500°C et 660°C.

Pour ces deux exemples de feuille d'aluminium 10, la durée du traitement thermique est alors comprise entre une vingtaine de minutes et environ deux heures, de préférence une trentaine de minutes.

Dans le cas de feuilles d'aluminium 10 d'épaisseur plus importante, typiquement 12 mm, la durée du traitement thermique est alors de préférence de l'ordre de 45 minutes. Par ailleurs, selon une forme de réalisation préférée, la feuille d'aluminium 10 est directement traitée thermiquement, sans avoir subi au préalable une étape de pré-laminage. En effet, un tel pré-laminage pourrait conduire à des recristallisations primaires ou secondaires de l'aluminium et rendre plus difficile sont colaminage ultérieur.

Dans une deuxième étape, on refroidit la feuille d'aluminium 10.

Il faut en effet distinguer le temps nécessaire pour refroidir la feuille d'aluminium 10 et le temps de séjour à la température de stabilisation de la couche d'alumine qui doit être considéré comme essentiel. Le temps de refroidissement et la température finale après refroidissement ne sont en effet pas des caractéristiques déterminantes per se, tant que l'on réduit suffisamment la température de la feuille d'aluminium 10 pour permettre son « laminage à froid » (voir plus loin dans la description).

Il est en effet possible de laisser refroidir la feuille 10 lentement à l'air ou rapidement (par exemple par une trempe), sans que cela n'ait d'influence sur le résultat obtenu.

La température finale de refroidissement peut, par exemple, être la température de la pièce dans laquelle est mis en oeuvre le procédé, typiquement une vingtaine de degrés. Il est cependant possible de refroidir davantage la feuille d'aluminium 10 (par exemple jusqu'à zéro degrés Celsius), ou de moins la refroidir (par exemple jusqu'à une soixantaine de degrés Celsius).

On obtient alors une feuille d'aluminium 10 ayant une résistance à la rupture moins importante que la feuille d'aluminium avant traitement thermique (entre 15 et 20 MPa, au lieu d'une soixantaine avant traitement thermique). Le traitement thermique permet en effet d'augmenter la taille du grain de l'aluminium, facilitant ainsi son travail ultérieur.

Des essais ont également montré que les feuilles d'aluminium obtenues suite au traitement thermique mis en oeuvre dans la première étape du procédé selon l'invention présentaient une plus large gamme de températures d'utilisation (entre environ -200°C et +200°C, au lieu de -200°C et +150°C pour les tôles seules) et devenaient soudables (par point ou autre).

Dans une dernière étape, on colamine la feuille d'aluminium 10 avec la couche métallique 20 choisie.

Il n'est pas nécessaire de mettre en oeuvre le colaminage immédiatement après le traitement thermique de la feuille d'aluminium 1. Par exemple, il est possible de laisser quelques heures voire quelques semaines s'écouler entre le traitement thermique et le colaminage des feuilles.

La couche métallique 20 doit présenter certaines propriétés physiques pour pouvoir être mise en oeuvre dans le procédé de fabrication.

En particulier, la couche métallique 20 doit présenter des irrégularités de surface 21 d'une dimension supérieure ou égale à l'épaisseur de la couche d'alumine alpha créée lors du traitement thermique de la feuille d'aluminium 10, i.e. typiquement de l'ordre de 5 microns.

Il est important de noter que l'épaisseur de la couche d'alumine reste globalement constante égale à 5 microns (à 1-2 microns près), quelle que soit l'épaisseur de la feuille d'aluminium 10, et ce même si l'on poursuit le traitement thermique au-delà de la durée nécessaire pour la stabiliser. Néanmoins, au-delà de quelques heures (généralement quatre heures), le traitement thermique devient un traitement "d'homogénéisation" : la couche d'alumine alpha se dégrade et les grains la constituant ne sont plus dans un même plan, de sorte son épaisseur finale est modifiée et qu'elle présente des effets noirs et verts.

Dans un exemple non revendiqué, la couche métallique 20 peut être constituée d'une poudre métallique 22 que l'on étale sur la feuille d'aluminium 10. Une telle couche 20 répond alors aux conditions posées quant aux irrégularités de surface 21 si sa granulométrie est supérieure ou égale à l'épaisseur de la couche d'alumine de la feuille d'aluminium 10.

La couche métallique 20 peut également comprendre une feuille métallique 23.

La feuille métallique 23 peut par exemple être un déployé (ou, de manière plus générale, une grille), ou une structure en nids d'abeilles, les irrégularités de surface 21 étant alors formées par les trous traversants ou obstrués présents dans la feuille 23. Par déployé on entend ici un treillis réalisé d'une seule pièce par découpage et étirage de métal laminé, tandis que par grille on entend par exemple une feuille réalisée par tissage de fils.

Il peut également s'agir d'une mousse métallique dont les pores 21 ont un diamètre supérieur ou égal à 5 microns, ou encore d'une feuille métallique dont les rugosités de surface sont d'une taille supérieure ou égale à 5 microns.

D'autres types de couches métalliques sont bien entendu utilisables, tant que les irrégularités de surface 21 sont de taille suffisamment importante. Par exemple, il est possible de traiter une feuille métallique 23 à surface lisse de manière à la rendre suffisamment irrégulière pour pouvoir être utilisée dans l'invention, par brossage à la paille de fer, par sablage, par traitement chimique, etc.

Dans la suite de cette description, le terme "feuille métallique" désignera une tôle métallique mince, un déployé métallique, une grille métallique, une mousse métallique, une structure métallique en nids d'abeilles, etc.

Lorsque la couche métallique comprend une telle feuille métallique, ladite feuille peut recevoir un traitement de surface par voie humide ou sèche notamment pour augmenter la tenue à la corrosion de la couche métallique 20 ainsi que certaines de ses caractéristiques physiques, telles que sa conductivité électrique, sa perméabilité magnétique, et modifier son coefficient de frottement.

Par exemple, il est possible d'effectuer un dépôt de nickel sur une couche 20 en acier afin d'en augmenter la résistance à la corrosion.

Qu'elle comprenne de la poudre métallique 22 et/ou une ou plusieurs feuilles métallique (23), la couche métallique 20 doit en outre être moins ductile que la feuille d'aluminium 10 après traitement thermique, de manière à permettre l'interpénétration de l'aluminium dans les irrégularités de surface 21 de la couche métallique 20 lors de l'étape de colaminage.

Elle peut par exemple être réalisée dans l'un au moins des matériaux comprenant l'acier, le fer, le nickel, le cobalt, un métal de structure cristallographique cubique à faces centrées (or, cuivre, argent, etc.), ou leurs alliages, etc.

Le colaminage de la feuille d'aluminium 10 avec la couche métallique 20 peut alors être effectué à chaud ou à froid, en une ou plusieurs passes. Cependant, les inventeurs ont remarqué à cet égard que le colaminage à froid (i.e. à température ambiante, sans nouvelle chauffe des feuille d'aluminium 10 et couche métallique 20, par exemple entre environ 0°C et 60°C) en une seule passe permettait d'obtenir de bien meilleurs résultats.

En effet, en effectuant plusieurs passes, l'assemblage 1 constitué par la feuille d'aluminium 10 et la couche métallique 20 risque de se délaminer, tandis qu'en n'effectuant qu'une seule passe, la feuille d'aluminium 10 interpénètre les grains et irrégularités de surface 21 de la couche métallique 20 de manière à former un assemblage métallique 1 cohérent.

Le colaminage peut notamment être effectué à une vitesse comprise entre 0,1 km/h et 3 km/h.

Lorsque la couche métallique 20 comprend une feuille métallique 23, il est possible d'assembler la feuille d'aluminium 10 et la couche métallique 20 préalablement au colaminage afin d'éviter que l'assemblage métallique 1 ne se déforme ou qu'elle ne dérive lors du colaminage, par exemple par rivetage des feuille 10 et couche 20, soudure par points, prélaminage de la tête de l'assemblage 1, vis auto-perforantes, soudage par faisceau d'électron, ou tout système de collage ou de bridage conventionnel.

Contrairement aux préjugés existants dans le domaine de la métallurgie, la soudure par points des feuilles devient en effet possible grâce au traitement thermique subi par la feuille d'aluminium 10, et plus particulièrement grâce à la transformation allotropique et à la stabilisation de la couche d'oxyde.

La couche d'alumine alpha joue en outre un rôle de lubrifiant lors du colaminage de l'assemblage métallique 1, et permet d'augmenter sensiblement la résistance à la corrosion de l'aluminium.

On obtient alors un assemblage métallique 1 présentant des propriétés remarquables telles qu'une résistance accrue à la corrosion et aux efforts de traction, un rapport résistance mécanique sur poids élevé, une gamme de température d'utilisation plus étendue que l'aluminium pur (entre environ -200°C et +200°C pour un assemblage aluminium-fer), ou encore une conductivité semblable à la conductivité de l'aluminium avant traitement thermique. L'assemblage métallique 1 peut en outre recevoir des traitements de surface, être embouti ou mis en forme comme toute autre tôle métallique conventionnelle.

Ainsi, l'assemblage métallique 1 obtenu grâce au procédé de fabrication selon l'invention permet de réduire la masse de tôleries (ou carcasse) de toute machine, notamment de véhicules (que ce soit dans le domaine automobile, aéronautique ou spatial).

Il est également possible de réduire la masse de containeurs ou autres réservoirs à pression d'utilisation constante, ou d'augmenter les pressions d'utilisation pour une masse de containeur constante.

Dans le domaine des machines de type asynchrone, on peut également augmenter la puissance volumique d'un facteur théorique de 2 voire 3, et/ou de réduire la masse de la machine par réduction des circuits magnétiques de retour de flux.

Par ailleurs, le procédé a un faible coût énergétique grâce à l'étape de colaminage à froid et la durée réduite du traitement thermique.

Nous allons, à présent, décrire des procédés de fabrication conformes à l'invention de manière plus détaillée, en prenant des exemples de couches métalliques pouvant être utilisées. Les exemples qui vont suivre ne sont cependant aucunement limitatifs et ne sont donnés qu'à titre d'illustration.

On notera par ailleurs que, quel que soit l'exemple de procédé décrit dans ce qui suit, les étapes de chauffe, de refroidissement et de colaminage restent les mêmes que dans le cadre du procédé de fabrication général précédemment décrit.

Pour un assemblage métallique 1 comprenant une feuille d'aluminium 10 et de la poudre métallique 22, le procédé conforme à l'invention peut alors comporter en outre une étape supplémentaire de traitement thermique de la poudre métallique 22 préalablement à l'étape de colaminage.

En effet, des essais ont démontré que la déshydratation des poudres 22 permettait d'améliorer la cohésion de l'assemblage métallique 1 obtenu, la surface spécifique des éléments constitutifs de la poudre 22 étant supérieure à celle des feuilles d'aluminium et métalliques. Ainsi, le niveau d'hydratation peut devenir important quant au résultat final obtenu, en particulier lorsque l'assemblage 1 est utilisé à des températures supérieures à 100°C, la vapeur d'eau créant des points de délamination par surpression locale interne.

Généralement, les poudres métalliques présentent environ 15% en poids d'eau, ce qui peut devenir gênant notamment lors de traitements de vieillissement, la vapeur saturante provoquant le délaminage des feuilles.

Pour de meilleurs résultats, il est donc préférable de réaliser le traitement thermique de la poudre métallique 22 de sorte que son degré d'hydratation soit suffisamment faible (typiquement inférieur à 1% d'eau superficielle et d'eau liée) pour réduire la vapeur saturante aux interfaces lors du colaminage avec la feuille d'aluminium 10.

Le temps de chauffe, de préférence sous vide, dépend à nouveau de la masse volumique, de la capacité thermique, de la conductivité thermique et de l'épaisseur de la couche 20 de poudre 22.

Par exemple, dans le cas d'une couche 20 de poudre de fer, le traitement thermique dure environ entre trente minutes et deux heures à 300°C, de manière à sécher totalement la poudre 22. Néanmoins, un séchage partiel à 120°C pendant une soixantaine de minutes sous vide peut suffire pour certains types de poudres 22 peu hydrophiles.

Par exemple, une poudre d'alumine déshydratée ne comprend généralement que 4% d'eau superficielle et 10% d'eau liée. De la sorte, un simple prétraitement thermique permet de réduire suffisamment son degré d'hydratation pour obtenir de bons résultats lors du colaminage avec la feuille d'aluminium 10 et limiter les risques de délaminage.

La couche 20 de poudre métallique 22 ainsi obtenue est alors colaminée avec la feuille d'aluminium 10 traitée thermiquement, de préférence à froid et en une seule passe.

Cette étape de colaminage de la feuille d'aluminium 10 avec la couche 20 de poudre métallique 22 est de préférence réalisée consécutivement à la déshydratation de la poudre 22, par exemple dans les minutes qui suivent, afin d'éviter la reprise d'humidité de la poudre 22. Le cas échéant, un nouveau traitement thermique est possible afin de déshydrater à nouveau la poudre 22.

Par ailleurs, la quantité de poudre 22 peut être variable en fonction de l'application désirée. Il est en effet possible d'appliquer une très fine couche 20 de poudre 22, une couche 20 discontinue de poudre 22, une couche 20 complète, voire plusieurs épaisseurs de poudres. Le résultat obtenu dépend alors du rapport entre la granulométrie de la poudre 22 et la quantité de poudre 22 appliquée. Une couche 20 très fine, présentant une épaisseur minimale de l'ordre de cinq microns, comprendra par exemple de la poudre 22 atomisée ayant un effet de bille qui rend le colaminage difficile. Au contraire, une couche 20 épaisse, pouvant avoir jusqu'à deux millimètres d'épaisseur, comprendra par exemple de la poudre 22 angulaire qui est facile à colaminer.

L'assemblage métallique 1 ainsi obtenu présente alors des propriétés inattendues, notamment de bonnes caractéristiques mécaniques par rapport à une feuille d'aluminium seule, et une grande stabilité dans le temps.

D'une part, l'assemblage métallique 1 cumule certaines des propriétés propres à l'aluminium et au métal constitutif de la poudre 22 pris séparément. Ainsi, dans le cas d'une poudre de fer, il a été constaté que l'assemblage métallique 1 était ferromagnétique, et était capable d'attirer des aimants et de les maintenir en contact avec sa surface extérieure, tout en ayant une bonne conductivité électrique et une faible densité.

Avantageusement, la mise en oeuvre de poudre 22 permet d'avoir une bonne répartition du matériau la constituant dans l'assemblage métallique finale 1, sans pour autant avoir d'impact sensible sur sa densité globale.

De la sorte, il devient possible d'utiliser l'assemblage métallique 1 aluminium-fer obtenu selon le procédé de l'invention afin de réaliser des blindages électromagnétiques souples, légers et mécaniquement résistants suivant les épaisseurs choisies pour la feuille d'aluminium 10 et la couche métallique 20.

Pour un assemblage métallique 1 comprenant une feuille d'aluminium 10 et une couche métallique 20 constituée d'une feuille d'acier, le procédé peut en outre comprendre une étape supplémentaire de chauffe de la feuille d'acier 20 à une température comprise entre 70% et 98% de sa température de fusion, par exemple 1100 °C, pendant une durée dépendant de l'épaisseur de la feuille d'acier 20, typiquement pendant 30 minutes pour une feuille d'acier 20 d'un millimètre d'épaisseur.

Le temps de chauffe dépend de la masse volumique, de la capacité thermique, de la conductivité thermique et de l 'épaisseur de la feuille d'acier 20.

Dans cet exemple de réalisation, la feuille d'aluminium 10 est réalisée dans un alliage série 1000 et la feuille d'acier 20 est une feuille d'acier faiblement allié de XC10.

L'acier est alors refroidi jusqu'à la température de refroidissement de la feuille d'aluminium. A nouveau, comme pour la feuille d'aluminium 10, la durée du refroidissement et la température finale de l'acier refroidi ne sont pas des paramètres déterminants.

On décape alors mécaniquement ou chimiquement la feuille d'acier 20 de manière à ôter la couche d'oxydes présente en surface qui pourraient empêcher la formation d'un assemblage métallique 1 cohérent.

Selon une forme de réalisation, le décapage est réalisé par sablage. Etant donné que la surface de la feuille métallique 20 ne doit pas être régulière, la granulométrie du sablage n'a pas d'importance. Il faut en revanche contrôler la pression du sablage afin d'éviter les intrusions de grains d'abrasifs dans le métal.

En variante, le décapage est réalisé par attaque acide (par exemple avec de l'acide chlorhydrique), par brossage à la paille de fer, ou toute autre technique connue.

La feuille d'acier 20 ainsi obtenue est alors colaminée avec la feuille d'aluminium 10 traitée thermiquement, de préférence à froid et en une seule passe.

L'assemblage métallique 1 ainsi obtenu présente alors des propriétés inattendues supplémentaires.

En effet, l'assemblage métallique 1 cumule certaines des propriétés propres à l'aluminium et à l'acier pris séparément. Ainsi, il a été constaté que l'assemblage métallique 1 était ferromagnétique, et était capable d'attirer des aimants et de les maintenir en contact avec sa surface extérieure, tout en ayant une bonne conductivité électrique et une faible densité.

Par exemple, pour un assemblage métallique 1 comprenant un papier aluminium alimentaire de titre A5 et un déployé 23 en nickel d'une épaisseur d'environ 1 mm, la perméabilité magnétique relative de l'assemblage est de l'ordre de 300, sa conductivité est proche de celle de l'aluminium (de l'ordre de 4,6 10⁺⁸ Ohm⁻¹.m⁻¹), sa résistance mécanique à la traction est de l'ordre de 10 MPa (ce qui est important pour une feuille 10 de si faible épaisseur, environ 100 microns), tandis que sa densité est de l'ordre de 4,7.

De la sorte, il devient possible d'utiliser l'assemblage métallique 1 aluminium-nickel obtenu selon le procédé de l'invention afin de réaliser des blindages électromagnétiques souples, légers et mécaniquement résistants suivant les épaisseurs choisies pour les feuilles d'aluminium 10 et métallique 23.

De plus, l'assemblage 1 peut subir un laminage successif (successive rolling bonding) permettant de multiplier mécaniquement le nombre de couches à partir d'un seul assemblage initial. Ce multicouche possède alors des caractéristiques encore supérieures à l'assemblage initial notamment en termes de résistance mécanique (traction / déchirement) et magnétique par une meilleure répartition dans l'épaisseur.

Par ailleurs, dans l'exemple de réalisation où la couche métallique 20 est une feuille d'acier, il est possible de n'utiliser qu'un laminoir à deux cylindres au lieu d'un laminoir à quatre cylindres, car l'assemblage 1 reste suffisamment aligné au cours du laminage.

D'autre part, des tests effectués sur un tel assemblage métallique 1 ont permis de constater qu'il résistait également à la corrosion et au délaminage dans une ambiance en phase vapeur d'eau saturante à 210°C pendant 12 heures. De même, les assemblages obtenus ont résisté à des températures de 77K (environ - 196°C) sans se délaminer.

Des essais ont également montré que les tôles d'aluminium obtenues suite au traitement thermique mis en oeuvre dans la première étape du procédé selon l'invention présentaient une plus large gamme de températures d'utilisation (entre environ -200°C et +200°C, au lieu de -200°C et +150°C pour les tôles seules),

On notera cependant que le traitement thermique de la feuille métallique 23 n'est pas nécessaire pour tous les matériaux. Il a pour objectif d'adoucir mécaniquement le matériau la constituant.

Par exemple, dans le cadre de la fabrication d'un assemblage métallique 1 formé d'une feuille d'aluminium 10 interpénétrant une feuille 23 de nickel, de cuivre, d'or, ou de tout autre matériau cubique à faces centrées, l'étape de chauffe de la feuille métallique 23 est optionnelle, ainsi que son décapage en surface.

En variante, le procédé selon l'invention permet également de réaliser un assemblage formé de deux feuilles d'aluminium 10, 10' qui s'interpénètrent. La couche métallique 20 est donc ici une feuille d'aluminium supplémentaire.

Grâce à cette forme de réalisation, il devient donc possible de souder ensemble deux feuilles d'aluminium 10, 10', ce qui n'était pas envisageable selon les techniques de soudage conventionnelles, notamment à cause de la barrière formée par la couche d'alumine.

Pour cela, le procédé de fabrication d'un assemblage métallique 1 de deux feuilles d'aluminium comprend simplement une étape supplémentaire de chauffe et de refroidissement de la feuille d'aluminium supplémentaire 10' par rapport au procédé général conforme à l'invention, la couche métallique 20 étant ici la feuille d'aluminium supplémentaire 10'.

Plus précisément, les deux feuilles d'aluminium sont traitées thermiquement, simultanément ou successivement, puis refroidies, conformément aux deux premières étapes (chauffe puis refroidissement) du procédé général qui ont été précédemment détaillées.

On notera qu'une feuille d'aluminium 10' identique ou similaire à la première feuille d'aluminium répond bien aux exigences requises pour être colaminée avec la feuille d'aluminium 10. En effet, le traitement thermique permet d'une part de créer et stabiliser en surface une couche d'alumine alpha ayant une rugosité d'environ 5 microns d'épaisseur (et donc une surface suffisamment irrégulière) et d'autre part de rendre la feuille sensiblement aussi ductile que la première feuille d'aluminium.

On peut donc colaminer les deux feuilles d'aluminium 10, 10', de préférence à froid et en une seule passe, de manière à obtenir un assemblage métallique 1 comprenant deux feuilles d'aluminium qui s'interpénètrent.

Cet assemblage en aluminium 1 présente notamment des caractéristiques mécaniques accrues et les mêmes propriétés que chaque feuille d'aluminium prise séparément suite à son traitement thermique respectif. En particulier, il présente une résistance à la corrosion accrue (notamment dans l'acide nitrique à 68%), peut être soudé par points, utilisé dans une plus large gamme de températures, etc.

Selon une deuxième forme de réalisation, la couche métallique 20 comprend à la fois une feuille métallique 23 et de la poudre métallique 22.

Le procédé conforme à l'invention comprend alors, en plus des étapes du procédé général décrit plus haut, à la fois les étapes relatives à la mise en oeuvre de la poudre 22 (déshydratation partielle ou totale de la poudre, selon son degré d'hydratation initial) et, le cas échéant, les étapes relatives à la mise en oeuvre de la feuille 23 (traitement thermique et/ou décapage, selon le type de métal utilisé).

La poudre 22 est alors avantageusement placée entre la feuille d'aluminium 10 et la feuille métallique 23.

Selon un premier mode de réalisation, l'assemblage métallique 1 est obtenu par colaminage simultané de la feuille d'aluminium 10 avec la poudre 22 et la feuille métallique 23. A nouveau, le colaminage est réalisé de préférence en une seule passe et à froid.

Selon une deuxième forme de réalisation, le colaminage est réalisé en deux temps. Dans un premier temps, la feuille d'aluminium 10 est colaminée avec la poudre 22. On obtient alors un assemblage de base aluminium-poudre. Dans un second temps, l'assemblage aluminium-poudre est traité thermiquement selon les deux premières étapes de l'invention, puis colaminé avec la feuille métallique 23 pour obtenir l'assemblage métallique final 1.

Le traitement thermique de l'assemblage de base aluminium-poudre permet à nouveau d'augmenter la taille du grain de l'aluminium, facilitant ainsi son travail ultérieur, et de déshydrater la poudre incrustée pour réduire la vapeur saturante aux interfaces lors du colaminage avec la feuille métallique 23 et donc les risques de délaminage.

En variante, on réalise d'abord un assemblage de base aluminium-feuille, que l'on colamine ensuite avec la poudre 22, après traitements thermiques de l'assemblage de base et de la poudre 22.

L'assemblage métallique final 1 présente alors à la fois les caractéristiques de l'aluminium et celles des métaux utilisés pour la poudre 22 et la feuille 23.

Par exemple, pour un assemblage métallique comprenant une tôle de 0.8 mm réalisée dans de l'aluminium de titre A5, un déployé 23 en acier d'une épaisseur d'environ 0.8 mm et une couche de poudre 22 d'épaisseur 2 mm, la perméabilité magnétique relative de l'assemblage final 1 est de l'ordre de 100, et sa conductivité est proche de celle de l'aluminium (de l'ordre de 4,6. 10⁻⁸ Ohm¹.m⁻¹).

Cet assemblage métallique 1 a la particularité de comprendre une feuille d'aluminium qui interpénètre les deux couches métalliques 20: en remplissant une partie des trous du déployé 23, la poudre métallique 22 peut alors rendre l'assemblage très magnétique car elle centralise une grande quantité de poudre 22 sur une faible surface.

Par ailleurs, les assemblages métalliques ainsi obtenus selon le procédé de l'invention peuvent servir de base à la fabrication de nouveaux assemblages, par colaminage avec une couche métallique additionnelle. Ces nouveaux assemblages seront appelés par la suite des sandwiches 2, afin de les distinguer des assemblages aluminium-métal précédemment décrits.

Selon une première forme de réalisation, il est possible de souder une feuille d'aluminium additionnelle 10' à un assemblage métallique 1 obtenu selon le procédé précédemment décrit afin d'obtenir un sandwich métallique 2.

Pour cela, on chauffe la feuille d'aluminium additionnelle 10' et l'assemblage 1 déjà obtenu et on les refroidit, conformément deux premières étapes du procédé de l'invention, puis on colamine la feuille d'aluminium additionnelle 10' avec l'assemblage métallique 1, de préférence à froid et en une seule passe.

En variante, le sandwich 2 est réalisé ab initio, après traitement thermique des feuilles 10, 10', en colaminant simultanément les deux feuilles d'aluminium 10, 10' et la couche métallique 20 (poudre 22 et/ou feuille(s) métallique(e)), sans l'étape intermédiaire de fabrication de l'assemblage 1.

Pour cela, on traite thermiquement les feuilles d'aluminium 10, 10' conformément aux deux premières étapes du procédé selon l'invention,

On traite également thermiquement la poudre métallique 22 afin de la déshydrater, et/ou le cas échéant la feuille métallique 23 (dans le cas par exemple d'un déployé en acier).

Puis on colamine la feuille 23 et la poudre 22 entre les deux feuilles d'aluminium 10, 10', de préférence à froid et en une seule passe.

En variante, suite au traitement thermique des feuilles d'aluminium 10 et 10' on colamine d'abord la première feuille d'aluminium 10 avec la feuille 23 et la deuxième feuille 10' avec la poudre 22, afin d'obtenir un assemblage 1 aluminium-poudre et un assemblage 1 aluminium-feuille respectivement. Il suffit alors de retraiter thermiquement les deux assemblages à une température comprise entre 80% et 100% de la température de fusion de la feuille d'aluminium 10, 10' pendant plusieurs minutes, par exemple une trentaine de minutes, et de les refroidir, conformément aux deux premières étapes du procédé général précédemment décrit, puis de les colaminer pour obtenir le sandwich 2 comprenant les deux feuilles d'aluminium 10, 10' renfermant la feuille 23 et la poudre 22.

Par exemple, pour un sandwich métallique 2 comprenant deux tôles d'aluminium de titre A5 de 0,8 millimètres d'épaisseur (10) et (10') renfermant un déployé d'acier XC10 d'épaisseur 0,8mm 23 et de la poudre de nickel 22, le sandwich obtenu a une épaisseur d'environ 0.8 millimètres, une perméabilité magnétique relative d'environ 100, une densité de l'ordre de 3,2 et une conductivité électrique d'environ 4,4 10⁺⁸ Ohm⁻¹.m⁻¹.

En réitérant ces étapes de chauffe, refroidissement et colaminage (ou en colaminant directement l'ensemble des couches 10, 10', 20, 20' du sandwich, après leurs traitements thermiques respectifs), on peut ainsi obtenir des sandwiches 2 comprenant plus d'une couche en aluminium 10 et une couche métallique 20. Le nombre de couches 10, 10', 20, 20' et le choix des couches métalliques 20, 20' (comprenant chacune de la poudre métallique 22 et/ou une (ou des) feuille(s) métallique(s) 23, 23') dépend bien entendu des propriétés souhaitées pour le sandwich 2 et améliorent la résistance à la traction du sandwich (par exemple, la résistance à la rupture d'un assemblage aluminium-fer est environ supérieure à trois fois celle de l'aluminium seul), typiquement de 50 à 150 MPa.

Avantageusement, les sandwichs 2 comprenant deux feuilles d'aluminium 10, 10' renfermant une ou plusieurs couches métalliques 20 présentent des propriétés de résistance à la corrosion surprenantes et une importante résistance au délaminage. Ainsi, l'immersion d'un tel sandwich 2 dans un bain d'azote liquide à 77 K (-196°C) a montré que le sandwich 2 restait cohérent malgré les coefficients de dilatation différents de l'aluminium et de l'acier.

Par ailleurs, le sandwich 2 selon l'invention est capable de résister à une attaque d'acide nitrique concentré à 68% pendant plusieurs jours. Seule la couche métallique 20 est attaquée si les flancs du sandwich 2 ne sont pas protégés, c'est-à-dire si la couche métallique 20 renfermée par les feuilles d'aluminium 10, 10' est en contact avec l'acide.

L'étanchéité de la partie centrale métallique 20 du sandwich 2 est en revanche plus facile à obtenir lorsque la couche métallique 20 est constituée de poudre 22. Il suffit en effet de ne pas mettre de poudre 22 sur les bords des feuilles d'aluminium 10, 10' lors du colaminage. On évite alors tout délaminage par oxydation de la partie centrale métallique 20.

Les sandwiches peuvent en outre être réalisés avec plusieurs types de couches métalliques différentes, afin de cumuler certaines propriétés d'intérêt. Par exemple, la soudure par le procédé selon l'invention d'un assemblage métallique 1 comprenant de la poudre 22 et/ou un déployé 23 d'acier avec un assemblage métallique 1 comprenant un déployé 23 et/ou de la poudre 22 de nickel permet d'obtenir un sandwich comprenant à la fois de l'aluminium, de l'acier et du nickel, afin d'adapter la conductivité, la perméabilité magnétique, et la densité, par exemple à l'application désirée.

Avantageusement, le procédé selon l'invention permet d'obtenir des assemblages métalliques 1 et sandwiches 2 de couches métalliques 20 récupérables facilement par fusion. En effet, il est possible de séparer et récupérer par gravité le composant de l'assemblage métallique 1 ayant la température de fusion la plus basse. Dans le cas d'un sandwich mixte, comprenant plus d'un matériau différent pour les couches métalliques, il suffit alors de réitérer l'opération jusqu'à ce qu'il ne reste plus qu'un type de matériau.

## Revendications

1. Procédé de fabrication d'un assemblage aluminium-métal (1) comprenant les étapes consistant à :
- traiter thermiquement une feuille en aluminium (10) en la portant à une température comprise entre 80% et 100% de la température de fusion du matériau la constituant pendant une durée comprise entre une vingtaine de minutes et deux heures pour créer et stabiliser par transformation allotropique une couche d'alumine alpha en surface de ladite feuille d'aluminium (10), puis en la laissant refroidir ;
- prévoir une couche métallique (20), comprenant une feuille métallique (23) choisie dans le groupe constitué par une grille, un déployé, une mousse métallique, une structure en nids d'abeilles, des câbles, ou une feuille métallique rugueuse, et comprenant éventuellement une poudre métallique (22), ladite couche métallique (20) ayant une ductilité inférieure ou égale à la ductilité de la feuille en aluminium (10) après refroidissement, ladite couche (20) présentant des irrégularités de surface (21) d'une profondeur supérieure ou égale à l'épaisseur de la couche d'alumine alpha ; et
- colaminer la feuille d'aluminium (10) et la couche métallique (20) afin d'obtenir l'assemblage métallique (1).

2. Procédé selon la revendication 1, dans lequel le colaminage est réalisé à froid.

3. Procédé selon l'une des revendications 1 et 2, dans lequel le colaminage est réalisé en une seule passe.

4. Procédé selon l'une des revendications 1 à 3, dans lequel la couche métallique (20) comprend de la poudre métallique (22) et le procédé comprend en outre une étape de déshydratation de la poudre métallique (22) préalablement à l'étape de colaminage.

5. Procédé selon la revendication 1, dans lequel la couche métallique (20) est une feuille d'aluminium supplémentaire (20), ledit procédé comprenant en outre, préalablement à l'étape de colaminage des feuilles (10, 20), les étapes suivantes :
- porter la feuille d'aluminium supplémentaire (20) à une température comprise entre 80% et 100% de la température de fusion du matériau la constituant pendant une durée comprise entre une vingtaine de minutes et deux heures pour créer et stabiliser par transformation allotropique une couche d'alumine alpha à la surface de ladite feuille d'aluminium ; et
- laisser refroidir la feuille d'aluminium supplémentaire (20).

6. Procédé selon la revendication 1 comprenant en outre les étapes suivantes préalablement à l'étape de colaminage (10, 20) :
- chauffer la feuille métallique (23) à une température comprise entre environ 70% et 98% de la température de fusion du métal la constituant pendant une durée déterminée en fonction de l'épaisseur de la feuille ; et
- laisser refroidir la feuille métallique (23) jusqu'à température ambiante.

7. Procédé selon la revendication 6, comprenant en outre une étape au cours de laquelle la feuille métallique (23) est décapée entre les étapes de refroidissement et de colaminage.

8. Procédé selon l'une des revendications 6 à 7, comprenant en outre une étape au cours de laquelle la feuille métallique (23) reçoit un traitement de surface.

9. Procédé selon l'une des revendications 6 à 8, dans lequel l'assemblage comprend en outre une feuille d'aluminium additionnelle (10') et éventuellement une couche métallique supplémentaire (20'), ledit procédé comprenant en outre une étape d'assemblage des feuilles d'aluminium (10, 10') et métallique(s) (20, 20') préalablement à leur colaminage.

10. Procédé selon l'une des revendications 1 à 9, comprenant en outre les étapes suivantes :
- porter une feuille d'aluminium additionnelle (10') à une température comprise entre 80% et 100% de la température de fusion du matériau pendant une durée comprise entre une vingtaine de minutes et deux heures pour créer et stabiliser par transformation allotropique une couche d'alumine alpha à la surface de ladite feuille d'aluminium additionnelle (10') ;
- laisser refroidir la feuille d'aluminium additionnelle (10'); et
- colaminer la feuille d'aluminium additionnelle (10') avec l'assemblage métallique (1).

11. Procédé selon la revendication 10, dans lequel le colaminage de la feuille d'aluminium additionnelle (10') avec l'assemblage métallique (1) est réalisé simultanément ou postérieurement au colaminage de la feuille d'aluminium (10) et de la couche métallique (20) formant l'assemblage (1).

12. Procédé selon l'une des revendications 1 à 11, dans lequel on réalise au moins deux assemblages métalliques (1), et comprenant en outre les étapes suivantes :
- porter chaque assemblage métallique à une température comprise entre 80% et 100% de la température de fusion du matériau constituant la feuille d'aluminium (10) pendant une durée comprise entre une vingtaine de minutes et deux heures pour créer et stabiliser par transformation allotropique une couche d'alumine alpha à la surface de la feuille d'aluminium (10, 10') de chaque assemblage (1);
- refroidir chaque assemblage métallique (1) jusqu'à température ambiante ; et
- colaminer les assemblages métalliques (1).

13. Assemblage métallique (1) obtenu par le procédé selon l'une des revendications 1 à 12, comprenant :
- une feuille d'aluminium (10) comprenant en surface une couche d'alumine alpha ayant une épaisseur comprise entre 3 et 7 microns, et
- une couche métallique (20), comprenant une feuille métallique (23) choisie dans le groupe constitué par une grille, un déployé, une mousse métallique, une structure en nids d'abeilles, des câbles, ou une feuille métallique rugueuse et comprenant éventuellement une poudre métallique (22), ladite couche métallique (20) étant appliquée contre une surface de la feuille d'aluminium (10),
ladite feuille d'aluminium (10) interpénétrant des irrégularités de surface (21) de la couche métallique (20).

14. Assemblage métallique (1) selon la revendication 13, dans lequel la feuille métallique (23) est réalisée dans l'un des matériaux du groupe suivant : acier, fer, nickel, cobalt, métal cubique à faces centrées ou leurs alliages, et la feuille d'aluminium est réalisée dans de l'aluminium pur ou dans un alliage d'aluminium.

15. Assemblage métallique (1) selon l'une des revendications 13 à 14, comprenant en outre une feuille d'aluminium additionnelle (10') par-dessus la couche métallique (20).

## Patentansprüche

1. Verfahren zum Herstellen einer Aluminium-MetallAnordnung (1), umfassend die Schritte, die bestehen im:
- thermischen Behandeln einer Aluminiumfolie (10), um durch allotrope Umwandlung eine alpha-Aluminiumoxidschicht an der Oberfläche der Aluminiumfolie (10) zu erzeugen und zu stabilisieren, indem man sie während einer Dauer im Bereich zwischen rund zwanzig Minuten und zwei Stunden auf eine Temperatur im Bereich zwischen 80 % und 100 % der Schmelztemperatur des Metalls, aus welchem sie besteht, bringt, und indem man sie danach abkühlen lässt;
- Vorsehen einer Metallschicht (20), die eine Metallfolie (23) umfasst, ausgewählt aus der Gruppe bestehend aus einem Gitter, einem Streckmetall, einem Metallschaum, einer Wabenstruktur, Kabeln oder einer rauen Metallfolie, und die gegebenenfalls ein Metallpulver (22) umfasst, wobei die Metallschicht (20) eine Duktilität kleiner oder gleich der Duktilität der Aluminiumfolie (10) nach Abkühlen aufweist, wobei die Schicht (20) Oberflächenunregelmäßigkeiten (21) einer Tiefe größer oder gleich der Dicke der alpha-Aluminiumoxidschicht aufweist; und
- Kolaminieren der Aluminiumfolie (10) und der Metallschicht (20), um die Metallanordnung (1) zu erhalten.

2. Verfahren nach Anspruch 1, wobei das Kolaminieren kalt ausgeführt wird.

3. Verfahren nach einem der Ansprüche 1 und 2, wobei das Kolaminieren in einem einzigen Durchgang ausgeführt wird.

4. Verfahren nach einem der Ansprüche 1 bis 3, wobei die Metallschicht (20) Metallpulver (22) umfasst, und das Verfahren vor dem Schritt des Kolaminierens weiter einen Schritt des Dehydrierens des Metallpulvers (22) umfasst.

5. Verfahren nach Anspruch 1, wobei die Metallschicht (20) eine zusätzliche Aluminiumfolie (20) ist, wobei das Verfahren vor dem Schritt des Kolaminierens der Folien (10, 20) weiter die folgenden Schritte umfasst:
- Bringen der zusätzlichen Aluminiumfolie (20) während einer Dauer im Bereich zwischen rund zwanzig Minuten und zwei Stunden auf eine Temperatur im Bereich zwischen 80 % und 100 % der Schmelztemperatur des Metalls, aus welchem sie besteht, um durch allotrope Umwandlung eine alpha-Aluminiumoxidschicht an der Oberfläche der Aluminiumfolie zu erzeugen und zu stabilisieren; und
- Abkühlenlassen der zusätzlichen Aluminiumfolie (20) .

6. Verfahren nach Anspruch 1, vor dem Schritt des Kolaminierens (10, 20) weiter die folgenden Schritte umfassend:
- Erhitzen der Metallfolie (23) während einer abhängig von der Dicke der Folie bestimmten Dauer auf eine Temperatur im Bereich zwischen rund 70 % und 98 % der Schmelztemperatur des Metalls, aus welchem sie besteht; und
- Abkühlenlassen der Metallfolie (23) bis auf Umgebungstemperatur.

7. Verfahren nach Anspruch 6, zwischen den Schritten des Abkühlens und des Kolaminierens weiter einen Schritt umfassend, in dessen Verlauf die Metallfolie (23) geätzt wird.

8. Verfahren nach einem der Ansprüche 6 bis 7, weiter einen Schritt umfassend, in dessen Verlauf die Metallfolie (23) eine Oberflächenbehandlung erhält.

9. Verfahren nach einem der Ansprüche 6 bis 8, wobei die Anordnung weiter eine zusätzliche Aluminiumfolie (10') und gegebenenfalls eine zusätzliche Metallschicht (20') umfasst, wobei das Verfahren weiter einen Schritt des Anordnens der Aluminium- (10, 10') und Metallfolien (20, 20') vor ihrem Kolaminieren umfasst.

10. Verfahren nach einem der Ansprüche 1 bis 9, weiter die folgenden Schritte umfassend:
- Bringen einer zusätzlichen Aluminiumfolie (10') während einer Dauer im Bereich zwischen rund zwanzig Minuten und zwei Stunden auf eine Temperatur im Bereich zwischen 80 % und 100 % der Schmelztemperatur des Metalls, um durch allotrope Umwandlung eine alpha-Aluminiumoxidschicht an der Oberfläche der zusätzlichen Aluminiumfolie (10') zu erzeugen und zu stabilisieren;
- Abkühlenlassen der zusätzlichen Aluminiumfolie (10'); und
- Kolaminieren der zusätzlichen Aluminiumfolie (10') mit der Metallanordnung (1).

11. Verfahren nach Anspruch 10, wobei das Kolaminieren der zusätzlichen Aluminiumfolie (10') mit der Metallanordnung (1) gleichzeitig oder nach dem Kolaminieren der Aluminiumfolie (10) und der Metallschicht (20), welche die Anordnung (1) bilden, ausgeführt wird.

12. Verfahren nach einem der Ansprüche 1 bis 11, wobei mindestens zwei Metallanordnungen (1) ausgeführt werden, und weiter die folgenden Schritte umfassend:
- Bringen jeder Metallanordnung während einer Dauer im Bereich zwischen rund zwanzig Minuten und zwei Stunden auf eine Temperatur im Bereich zwischen 80 % und 100 % der Schmelztemperatur des Metalls, aus welchem die Aluminiumfolie (10) besteht, um durch allotrope Umwandlung eine alpha-Aluminiumoxidschicht an der Oberfläche der Aluminiumfolie (10, 10') jeder Anordnung (1) zu erzeugen und zu stabilisieren;
- Abkühlen jeder Metallanordnung (1) bis auf Umgebungstemperatur; und
- Kolaminieren der Metallanordnungen (1).

13. Metallanordnung (1), die über das Verfahren nach einem der Ansprüche 1 bis 12 erhalten wird, umfassend:
- eine Aluminiumfolie (10), die an der Oberfläche eine alpha-Aluminiumoxidschicht umfasst, welche eine Dicke im Bereich zwischen 3 und 7 Mikron aufweist, und
- eine Metallschicht (20), die eine Metallfolie (23) umfasst, ausgewählt aus der Gruppe bestehend aus einem Gitter, einem Streckmetall, einem Metallschaum, einer Wabenstruktur, Kabeln oder einer rauen Metallfolie, und die gegebenenfalls ein Metallpulver (22) umfasst, wobei die Metallschicht (20) gegen eine Oberfläche der Aluminiumfolie (10) aufgetragen wird,
wobei die Aluminiumfolie (10) in Oberflächenunregelmäßigkeiten (21) der Metallschicht (20) eindringt.

14. Metallanordnung (1) nach Anspruch 13, wobei die Metallfolie (23) in einem der Materialien aus der folgenden Gruppe ausgeführt ist: Stahl, Eisen, Nickel, Kobalt, kubisches Metall mit zentrierten Flächen oder deren Legierungen, und die Aluminiumfolie in reinem Aluminium oder in einer Aluminiumlegierung ausgeführt ist.

15. Metallanordnung (1) nach einem der Ansprüche 13 bis 14, die über der Metallschicht (20) weiter eine zusätzliche Aluminiumfolie (10') umfasst.

## Claims

1. Method of manufacturing an aluminium/metal assembly (1) comprising the steps consisting of:
- heat treating an aluminium sheet (10) by raising it to a temperature between 80% and 100% of the melting point of the material constituting it for a duration comprised between twenty minutes and two hours to create and stabilise, by allotropic transformation, an alpha alumina layer on the surface of said aluminium sheet (10) and then allowing it to cool again;
- providing a metal layer (20), comprising a metal sheet (23) chosen from one of the elements in the following group: a grille, a lattice, a metal foam, a honeycomb structure, cables or a rough metal sheet, and optionnally comprising a metallic powder (22), said metal layer (20) having a ductility less than or equal to the ductility of the aluminium sheet (10) after cooling, said layer (20) having surface irregularities (21) with a depth greater than or equal to the thickness of the layer of alpha alumina; and
- roll bonding the aluminium sheet (10) and the metal layer (20) in order to obtain the metal assembly (1).

2. Method according to claim 1, wherein the roll bonding is carried out cold.

3. Method according to one of claims 1 and 2, wherein the roll bonding is carried out in a single pass.

4. Method according to one of claims 1 to 3, wherein the metal layer (20) comprises metallic powder (22), and the method further comprises a step of dehydrating the metallic powder (22) prior to the roll bonding step.

5. Method according to claim 1, wherein the metal layer (20) is a supplementary aluminium sheet (20), said method further comprising, prior to the step of roll bonding of the sheets (10, 20), the following steps:
- raising the supplementary aluminium sheet (20) to a temperature of between 80% and 100% of the melting point of the material constituting it for a duration comprised between twenty minutes and two hours to create and stabilise by allotropic transformation an alpha alumina layer on the surface of said aluminium sheet; and
- leaving the supplementary aluminium sheet (20) to cool.

6. Method according to claim 1, further comprising the following steps prior to the roll bonding step (10, 20):
- heating the metal sheet (23) to a temperature of between approximately 70% and 98% of the melting point of the metal constituting it for a given period according to the thickness of the sheet; and
- leaving the metal sheet (23) to cool to ambient temperature.

7. Method according to claim 6, further comprising a step during which the metal sheet (23) is stripped between the cooling and roll bonding steps.

8. Method according to one of claims 6 to 7, further comprising a step during which the metal sheet (23) receives a surface treatment.

9. Method according to one of claims 6 to 8, wherein the assembly further comprises an additional aluminium sheet (10') and optionnally an additional metal layer (20'), said method further comprising a step of assembling the aluminium (10, 10') and metal (20, 20') sheets prior to roll bonding thereof.

10. Method according to one of claims 1 to 9, further comprising the following steps:
- raising an additional aluminium sheet (10') to a temperature of between 80% and 100% of the melting point of the material for a duration comprised between twenty minutes and two hours to create and stabilise, by allotropic transformation, an alpha alumina layer on the surface of said additional aluminium sheet (10');
- leaving the additional aluminium sheet (10') to cool; and
- roll bonding the additional aluminium sheet (10') with the metal assembly (1).

11. Method according to claim 10, wherein the roll bonding of the additional aluminium sheet (10') with the metal assembly (1) is carried out simultaneously with or subsequently to the roll bonding of the aluminium sheet (10) and the metal layer (20) forming the assembly (1).

12. Method according to any one of claims 1 to 11, wherein at least two metal assemblies (1) are produced, and further comprising the following steps:
- raising each metal assembly to a temperature of between 80% and 100% of the melting point of the material constituting the aluminium sheet (10) for a duration comprised between twenty minutes and two hours to create and stabilise, by allotropic transformation, an alpha alumina layer on the surface of the aluminium sheet (10, 10') of each assembly (1);
- cooling each metal assembly (1) to ambient temperature; and
- roll bonding the metal assemblies (1).

13. Metal assembly (1) obtained by the method according to any one of claims 1 to 12, comprising:
- an aluminium sheet (10) comprising a surface alpha alumina layer between 3 and 7 microns thick, and
- a metal layer (20), comprising a metal sheet (23) chosen from one of the elements in the following group: a grille, a lattice, a metal foam, a honeycomb structure, cables or a rough metal sheet, and optionnally comprising a metallic powder (22), said metal layer (20) being applied against a surface of the aluminium sheet (10), said aluminium sheet (10) interpenetrating surface irregularities (21) on the metal layer (20).

14. Metal assembly (1) according to claim 13, wherein the metal layer (23) is produced in one of the materials in the following group: steel, iron, nickel, cobalt, cubic metal with centred faces or alloys thereof, and the aluminium sheet is produced from pure aluminium or an aluminium alloy.

15. Metal assembly (1) according to any one of claims 13 to 14, further comprising an additional aluminium sheet (10') on top of the metal layer (20).
